# EUROPÄISCHE PATENTSCHRIFT

(11) **EP 2 018 547 B1**
(45) Veröffentlichungstag und Bekanntmachung des Hinweises auf die Patenterteilung: **28.09.2011**
(21) Anmeldenummer: 07729175.5
(22) Anmeldetag: 15.05.2007
(51) Int. Cl.: G01N 27/02, G01R 27/22, H01F 17/00

(54) **SENSOR ZUR ERMITTLUNG DER ELEKTRISCHEN LEITFÄHIGKEIT FLÜSSIGER MEDIEN UND EIN VERFAHREN ZU SEINER HERSTELLUNG**
SENSOR FOR DETERMINING THE ELECTRICAL CONDUCTIVITY OF LIQUID MEDIA, AND METHOD FOR THE PRODUCTION THEREOF
CAPTEUR POUR DÉTERMINER LA CONDUCTIBILITÉ ÉLECTRIQUE DE MILIEUX FLUIDES ET PROCÉDÉ DE FABRICATION ASSOCIÉ

(30) Priorität: 19.05.2006 DE 102006025098
(43) Veröffentlichungstag der Anmeldung: 28.01.2009
(73) Patentinhaber: Fraunhofer-Gesellschaft zur Förderung der angewandten Forschung e.V., 80686 München (DE)
(72) Erfinder: PARTSCH, Uwe, 01309 Dresden (DE); NEUBERT, Holger, 01099 Dresden (DE)
(74) Vertreter: Rauschenbach, Marion
(86) Internationale Anmeldenummer: PCT/EP2007/054727
(87) Internationale Veröffentlichungsnummer: WO 2007/135035

(56) Entgegenhaltungen:
- DE-A1- 10 338 471
- US-A- 3 030 573
- US-A- 5 680 051
- US-A- 5 793 272
- US-A1- 2004 124 961
- THELEMANN T ET AL: "Mechanical components in LTCC" PROCEEDINGS 2000 INTERNATIONAL SYMPOSIUM ON MICROELECTRONICS (SPIE VOL.4339) IMAPS - INT. MICROELECTRON. & PACKAGING SOC RESTON, VA, USA, 2000, Seiten 842-845, XP008084895 ISBN: 0-930815-62-9

## Beschreibung

Die Erfindung bezieht sich auf Anwendungsgebiete der Messtechnik und des Gerätebaus und betrifft einen Sensor zur Ermittlung der elektrischen Leitfähigkeit flüssiger Medien, wie er beispielsweise in der Chemie-, Lebensmittel-, Getränke- oder Pharmaindustrie, sowie Umwelttechnik und Bioverfahrenstechnik zur Ermittlung der Konzentration oder der Prozessüberwachung eingesetzt werden kann und ein Verfahren zu seiner Herstellung.

Zur Ermittlung der elektrischen Leitfähigkeit flüssiger Medien sind verschiedene Verfahren unter Ausnutzung unterschiedlicher Messprinzipien bekannt.

Mit kapazitiven Leitfähigkeitssensoren wird ein Strom mit Hilfe zweier, mit einem Dielektrikum beschichteten Elektroden in die Flüssigkeit geprägt, und aus der Spannung und dem Strom an den Elektroden die elektrische Leitfähigkeit der Flüssigkeit bestimmt (DE 40 22 563 A1).

Dabei besteht eine Anordnung zum berührungslosen Messen der spezifischen Leitfähigkeit wässriger Lösungen aus zwei Koppelelektroden, die einen Wechselstrom kapazitiv in eine Messzelle einprägen (DE 195 37 059 A1). Die Koppelelektroden bestehen aus einem gebrannten Laminat einer Folie aus dielektrischer Kondensatorkeramik mit einer Metallisierungsschicht und einer Trägerkeramik, wobei zur Verbesserung der mechanischen Stabilität der Koppelelektroden Durchkontaktierungen vorhanden sind.

Weiterhin sind konduktive Leitfähigkeitssensoren bekannt, die aus einem Elektrodenpaar bestehen, welches einen Wechselstrom in eine Flüssigkeit einprägt. Über ein zweites Elektrodenpaar wird der Spannungsabfall in der Flüssigkeit gemessen und aus Strom und Spannung an den Elektroden die elektrische Leitfähigkeit der Flüssigkeit bestimmt (US 5,959,455 A; US 6,414,493 B1).

Ebenfalls bekannt ist die Ermittlung der elektrischen Leitfähigkeit durch induktive Messmethoden. Prinzipiell weisen die dazu notwendigen Sensoren mindestens zwei gegen die Flüssigkeit abgedichtete Ringkernspulen auf, wobei durch die Senderspule die Flüssigkeit mit einer Wechselspannung beaufschlagt wird, durch die ein Strom in die Flüssigkeit entsprechend ihrer elektrischen Leitfähigkeit eingeprägt wird. Durch die Senderspule wird ein magnetisches Wechselfeld erzeugt, welches in der Flüssigkeit eine elektrische Spannung induziert. Die in der Flüssigkeit vorhanden Ionen ermöglichen einen Stromfluss, der mit steigender Ionenkonzentration zunimmt. Der Strom in der Flüssigkeit erzeugt in der Empfangsspule ein magnetisches Wechselfeld. Der dabei entstehende Induktionsstrom in der Empfangsspule wird gemessen und daraus die elektrische Leitfähigkeit der Flüssigkeit bestimmt.

Die ermittelte Leitfähigkeit ist ein Maß für die Ionenkonzentration in der Flüssigkeit.

Dazu ist ein induktiv arbeitender Sensor zum Messen der elektrischen Leitfähigkeit eines flüssigen Mediums bekannt (DE 198 51 146 A1). Der Sensor besteht aus einer mit dem Eingangssignal gespeisten Erregerspule und aus einer über die Flüssigkeit mit der Erregerspule gekoppelte Empfangsspule, die ein Ausgangssignal liefert, das ein Maß für die elektrische Leitfähigkeit der Flüssigkeit ist.

Weiterhin bekannt ist eine induktive Leitfähigkeitsmesszelle mit einer Sender- und einer Empfangsspule und einem Kurzschlusspfad mit dem zu messenden Medium, der die Sender- und Empfangsspule durchsetzt (DE 41 16 468 C2).

Bekannt ist auch eine Vorrichtung zur Messung der Leitfähigkeit von Flüssigkeiten mit zwei ringförmigen Kernen aus einem magnetisierbaren Material, die bezogen auf die Achse koaxial zueinander angeordnet sind (EP 0 470 367 B1). Die Kerne weisen eine Wicklung auf, die jeweils nur über eine engen Umfangssektor erstreckt ist und deren Mitteltangente, bezogen auf einen Schnitt senkrecht zur Achse, rechtwinklig zueinander angeordnet ist. Das die Ringkernspulen durchsetzende Messmedium bildet den gemeinsam umschlingenden und koppelnden elektrischen Leiter.

Allgemeine Untersuchungen zu elektrischen Theorie der konduktiven und induktiven Sensoren zur Ermittlung der elektrischen Leitfähigkeit sind nach D. Arnold und G.H. Meeten, J. Phys. E.: Schi. Instrum. 21 (1998) 448-453, bekannt.

Ebenfalls bekannt sind Leitfähigkeitssensoren, zu denen konkrete Angaben und Daten aus den technischen Informationen verschiedener Hersteller vorliegen (InduMax P CLS 50, InduMax H CLS 52, Fa. Endress+Hauser; InPro7250, Fa. Mettler Toledo).

Entsprechend den dadurch bekannten Informationen ist bei Einsatz der käuflich erhältlichen Leitfähigkeitsensoren bei der Messung aber auch der Einbau und die Geometrie des Sensors zu berücksichtigen. Dazu wird eine Zellkonstante angegeben, die vollständig die Geometrie des jeweiligen Sensors beschreibt. Ebenso muss der Einbaufaktor berücksichtigt werden, der jedoch mit größerem Wandabstand immer weniger Einfluss ausübt, was aber auch von der elektrischen Leitfähigkeit der die Flüssigkeit enthaltenden Rohre abhängt.

Um die jeweiligen Einflussbedingungen auf die Leitfähigkeitssensoren nicht nur empirisch zu ermitteln, sind auch numerische Modelle von induktiven Leitfähigkeitsmesssystemen bekannt (M. Roos u.a., Fachtagung, Simulation mit der Finite-Element-Methode in Feinwerk- und Mikrotechnik, 12. März 1996, München). Die Modelle enthalten kritische geometrische und elektrische Parameter zur Charakterisierung des Systemverhaltens. Mit diesen Parametern können Optimierungsschritte zur Reduktion der Verlustleistung, zur Erhöhung der Sensivität und Genauigkeit und zur Erweiterung des Messbereiches durchgeführt werden.

Nachteilig bei allen bekannten Leitfähigkeitssensoren ist ihr relativ großes Bauvolumen mit einer begrenzten Empfindlichkeit und ein relativ aufwändiges Herstellungsverfahren aufgrund teilweiser manuell notwendiger Montage.

Die Aufgabe der Erfindung besteht in der Angabe eines Sensors zur Ermittlung der elektrischen Leitfähigkeit flüssiger Medien, welcher in beliebigen, deutlich geringeren Charakterisierung des Systemverhaltens. Mit diesen Parametern können Optimierungsschritte zur Reduktion der Verlustleistung, zur Erhöhung der Sensivität und Genauigkeit und zur Erweiterung des Messbereiches durchgeführt werden.

Weiterhin ist aus der US 5,680,051 A eine elektromagnetische Induktions-Messsonde zur Messung von elektrischen Eigenschaften von Lösungen bekannt, die aus einem ersten und zweiten Transformator, einem elektrostatischen Schild, einem koaxialen Kabel und einem Stabilisator besteht. Der erste und zweite Transformator sind ringförmig ausgebildet und so übereinander angeordnet, dass ihre Löcher konzentrisch übereinander angeordnet sind. Das elektrostatische Schild ist um die Transformatoren symmetrisch angeordnet.

Nachteilig bei allen bekannten Leitfähigkeitssensoren ist ihr relativ großes Bauvolumen mit einer begrenzten Empfindlichkeit und ein relativ aufwändiges Herstellungsverfahren aufgrund teilweiser manuell notwendiger Montage.

Die Aufgabe der Erfindung besteht in der Angabe eines Sensors zur Ermittlung der elektrischen Leitfähigkeit flüssiger Medien, welcher in beliebigen, deutlich geringeren Abmessungen erhältlich ist und mindestens die elektrischen Eigenschaften der Sensoren nach dem Stand der Technik aufweist und ein einfacheres und kostengünstigeres Verfahren zu seiner Herstellung.

Die Aufgabe wird durch die in den Ansprüchen angegebene Erfindung gelöst. Vorteilhafte Ausgestaltungen sind Gegenstand der Unteransprüche.

Der erfindungsgemäße Sensor zur Ermittlung der elektrischen Leitfähigkeit flüssiger Medien besteht aus einem keramischen Multilayer-Schichtaufbau, der mindestens eine Trägerkeramik beinhaltet, auf mindestens der mindestens zwei magnetisierbare Kerne mit über die Länge der Kerne mindestens teilweise umgebenden metallischen Wicklungen angeordnet sind, elektrisch leitfähige Zu- und Ableitungen zu den Wicklungen der mindestens zwei Kerne vorhanden sind, und der Multilayer-Schichtaufbau mindestens von einer dielektrischen Schicht umgeben ist, wobei zur Ausnutzung des induktiven Messprinzipes die Anordnung des Sensors ein mindestens teilweise Umschließen der beiden umwickelten und ummantelten Kerne oder Kernteile gleichzeitig durch die Flüssigkeit realisiert.

Vorteilhafterweise ist die Trägerkeramik eine nicht elektrisch leitende LTCC-Keramik (Low Temperature Cofired Ceramic), noch vorteilhafterweise Al₂O₃.

Weiterhin vorteilhafterweise bestehen die keramischen Multilayer-Schichten aus einer Keramik, die bei Temperaturen bis maximal 900 °C dicht sintert.

Ebenfalls vorteilhafterweise bestehen die magnetisierbaren Kerne aus einem ferritischen Material, noch vorteilhafterweise ist das ferritische Material als Folie oder Paste eingesetzt.

Weiterhin vorteilhafterweise sind die magnetisierbaren Kerne als vorgeformte Festkörper eingesetzt.

Von Vorteil ist es weiterhin, wenn die Wicklungen aus Cu, Ag, Pd, Au, Al oder aus Kombinationen dieser Materialien bestehen.

Vorteilhaft ist es auch, wenn die magnetisierbaren Kerne ringförmig und/oder ineinander und/oder übereinander und/oder nebeneinander angeordnet sind.

Ebenfalls vorteilhaft ist es, wenn die magnetisierbaren Kerne jeweils zu 5 bis 100 % von Wicklungen umgeben sind.

Auch vorteilhaft ist es, wenn die magnetisierbaren Kerne jeweils bis maximal 50 % von Wicklungen umgeben sind und die Wicklungen gegenüberliegend angeordnet sind.

Von Vorteil ist es auch, wenn der gesamte Multilayer-Schichtaufbau eine Höhe/Dicke von 0,5 bis 5 mm aufweist.

Und auch vorteilhaft ist es, wenn die dielektrische Schicht aus einem Kunststoff oder einem Glas besteht.

Weiterhin ist es von Vorteil, wenn die Signalübertragung über elektrische Leitungen oder per Funk realisiert ist.

Und ebenfalls von Vorteil ist es, wenn weitere Sensoren auf Schichten innerhalb des Multilayer-Schichtaufbaus angeordnet sind, noch vorteilhafterweise sind Temperatur- und/oder pH-Sensoren innerhalb des keramischen Multilayer-Schichtaufbaus angeordnet.

Ebenfalls ist es von Vorteil, wenn mehrere magnetisierbare Kernpaare mit Wicklungen auf einem Trägersubstrat vorhanden sind, wobei auch hier zur Ausnutzung des induktiven Messprinzipes die Flüssigkeit mindestens teilweise alle umwickelten und ummantelten Kerne oder Kernteile gleichzeitig umschließt.

Bei dem erfindungsgemäßen Verfahren zur Herstellung eines Sensors zur Ermittlung der elektrischen Leitfähigkeit flüssiger Medien wird auf eine dielektrische keramische Trägergrünfolie mindestens ein Grünkörper für einen magnetisierbaren Kern aus einem ferritischen keramischen Material aufgebracht, der von einem metallischen Draht umwickelt ist, wobei zur Realisierung des induktiven Messprinzipes mindestens ein zweiter magnetisierbarer Kern mit Wicklungen aus einem metallischen Draht auf der gleichen oder einer anderen dielektrischen keramischen Folie aufgebracht wird, und die Wicklungen durch die keramische Folie/Folien durchkontaktiert worden sind, danach die metallischen Wicklungen mit einer elektrisch leitfähigen Verbindung kontaktiert werden und nachfolgend die Sinterung des keramischen Multilayer-Schichtaufbaus durchgeführt wird, wobei eine dielektrischen Ummantelung des gesamten Multilayer-Schichtaufbaus vor oder nach der Sinterung aufgebracht wird.

Vorteilhafterweise werden dielektrische keramische Grünfolien mit einer Dicke von 50 bis 250µm eingesetzt.

Ebenfalls vorteilhafterweise wird die Sinterung des Multilayer-Schichtaufbaus bei Temperaturen von maximal 900°C durchgeführt.

Von Vorteil ist es auch, wenn eine Ummantelung aus Kunststoff oder Glas bei Temperaturen von maximal 900°C aufgebracht wird.

Bei dem erfindungsgemäßen Verfahren zur Herstellung eines Sensors zur Ermittlung der elektrischen Leitfähigkeit flüssiger Medien wird mindestens ein magnetisierbarer Kern auf eine organische Trägerfolie oder Trägerplatte aufgelegt und mit wenigstens einer weiteren Lage organischen Trägermaterials belegt und gemeinsam zu einem starren oder nahezu starren Verbund verpresst oder verklebt, danach werden die Wicklungen aus metallischem Draht um den mindestens einen magnetisierbaren Kern entsprechend elektrischen Durchkontaktierungen in Leiterplatten hergestellt und mindestens ein Durchbruch durch den Multilayer-Schichtaufbau an der Stelle der inneren Öffnung eines jeden der magnetisierbaren Kerne und gleichzeitig oder nachfolgend die Trägerfolien oder Trägerplatten zum Multilayer-Schichtverbund verpresst, danach die metallischen Wicklungen mit einer elektrisch leitfähigen Verbindung kontaktiert und nachfolgend eine dielektrischen Ummantelung des gesamten Multilayer-Schichtaufbaus aufgebracht.

Und auch von Vorteil ist es, wenn die Ummantelung durch Tauchen oder Aufspritzen aufgebracht wird.

Mit der erfindungsgemäßen Lösung können die zum Teil erheblichen Nachteile der Lösungen nach dem Stand der Technik für Leitfähigkeitssensoren deutlich verbessert werden. Insbesondere ist ein Sensor mit deutlich geringeren Abmessungen herstellbar, der auch durchgehend industriell gefertigt werden kann, ohne dass manuelle Arbeiten erforderlich sind. Die Multilayer-Technologie bietet ein breites Spektrum von einzelnen Verfahrensschritten, die nach dem Stand der Technik gut bekannt sind und nun erstmals für derartige Sensoren zur Anwendung kommt. Der besondere Vorteil liegt in der mehrlagigen Anordnung von Folien oder Platten und Elementen, was einen dreidimensionalen Aufbau des Sensors und/oder mehrerer gleicher oder anderer Sensoren auf einem Trägersubstrat ermöglicht. Diese könnten dann auch von Isolations- und/oder Passivierungsschichten voneinander getrennt angeordnet sein. Die jeweiligen Funktionselemente können auf die Trägersubstrate gedruckt werden oder selbst durch Substratschichten realisiert werden. Die Wicklungen um die Kernmaterialien können nach dem bekannten Prinzip der Durchkontaktierungen realisiert werden, die auf die Leiterzüge der darunterliegenden Folie oder Platte treffen. Auf andere bekannte Weise sind sie auch durch Bonden über das Kernmaterial hinweg herzustellen. Auch Öffnungen in einzelnen oder allen keramischen oder organischen Folien oder Platten sind ohne Probleme herstellbar und bleiben auch während nachfolgender Verfahrensschritte erhalten.

Auf diese Art und Weise ist eine erhebliche Reduzierung der Fertigungskosten erreichbar.

Mit der erfindungsgemäßen Lösung lassen sich Sensoren mit einer beispielsweise bis zu 8-fachen Steigerung der Empfindlichkeit angeben. Auch treten geringe Messtoleranzen auf, was zu einer Verringerung der Streuung des Sensorverhaltens führt, was die Justierung und Kalibrierung vereinfacht.

Mittels keramischer Multilayertechnologie lassen sich weiterhin auf einfache Weise zusätzliche Funktionen sensornah integrieren, was mit den beschriebenen Verfahren nach dem Stand der Technik nicht oder nur sehr aufwändig möglich ist. Beispiele hierfür sind: elektronische Baugruppen für die Messdatenauswertung, die Selbstdiagnosel-kalibrierung und externe Schnittstellen. Eine Anordnung mehrerer induktiver Leitfähigkeitssensoren oder Kombinationen aus induktiven Leitfähigkeitssensoren und solchen anderer Messprinzipien oder Messgrößen (z.B. pH-Wert, Temperatur) auf demselben Substrat ist ohne weiteres möglich.

Der Multilayeraufbau des Sensors wird durch weitere Verfahrensschritte unempfindlicher gegen Umgebungseinflüsse gemacht, z.B. durch Lackieren oder Tauchen oder Umspritzen mit Kunststoff oder Umglasen. Ebenso ist die Montage in ein festes, dichtes Gehäuse möglich.

Nachfolgend wird die Erfindung an zwei Ausführungsbeispielen näher erläutert.

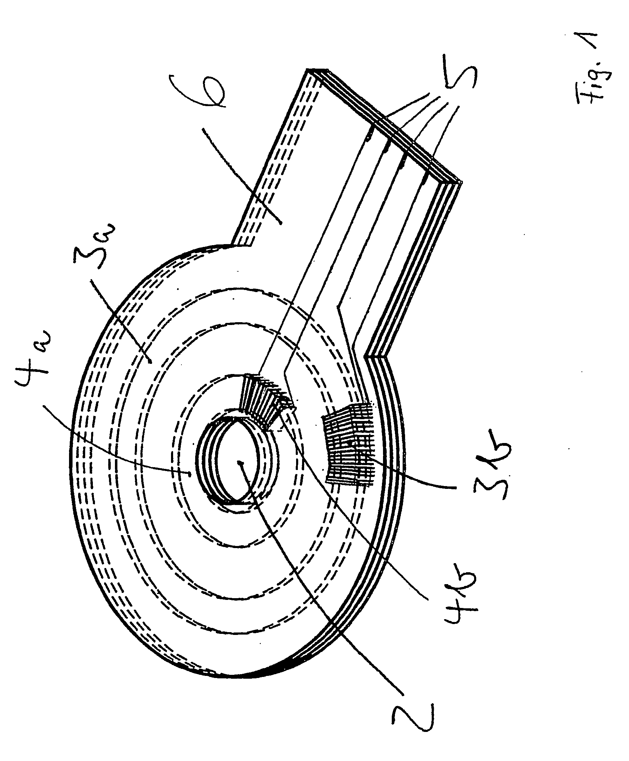

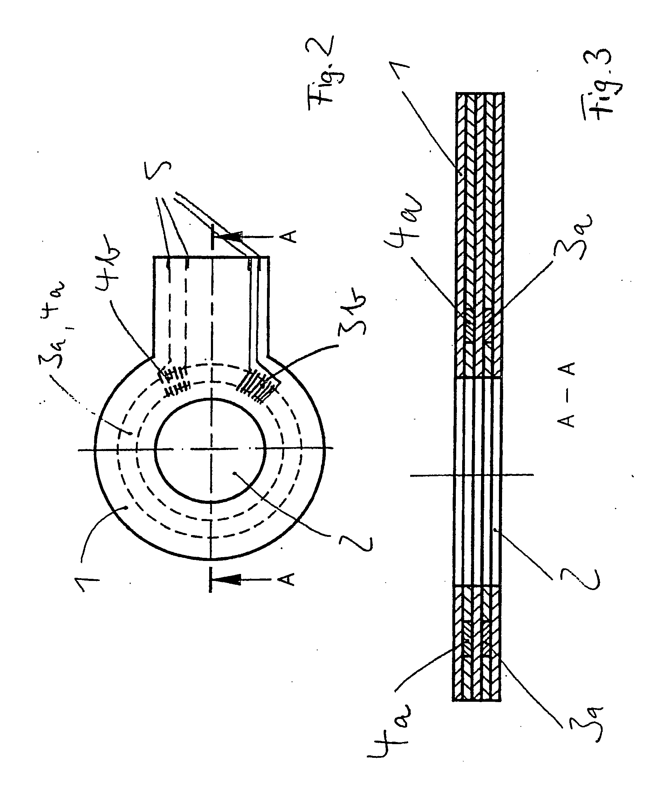

Dabei zeigen die
Figuren 1, 2, 3: die Ansicht, die Draufsicht und einen Schnitt der Draufsicht eines erfindungsgemäßen Sensors aus keramischem Substratmaterial, bei dem die zwei magnetisierbaren kreisförmigen Kerne übereinander angeordnet sind.

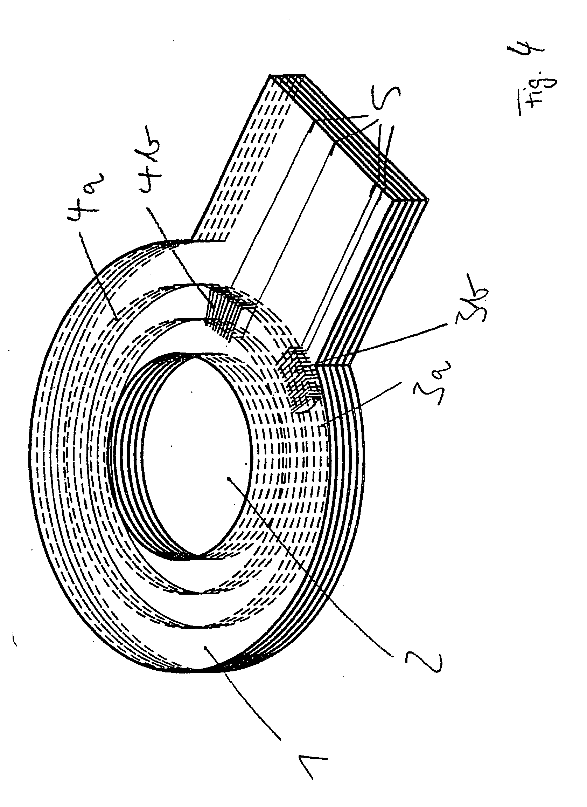

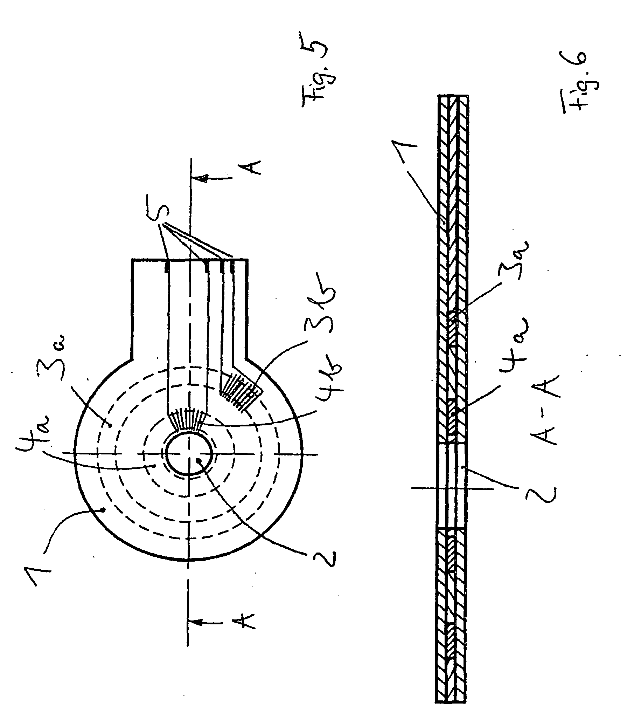

Figuren 4, 5, 6: die Ansicht, die Draufsicht und einen Schnitt der Draufsicht eines erfindungsgemäßen Sensors aus keramischem Substratmaterial, bei dem die zwei magnetisierbaren kreisförmigen Kerne ineinander in einer Ebene angeordnet sind.

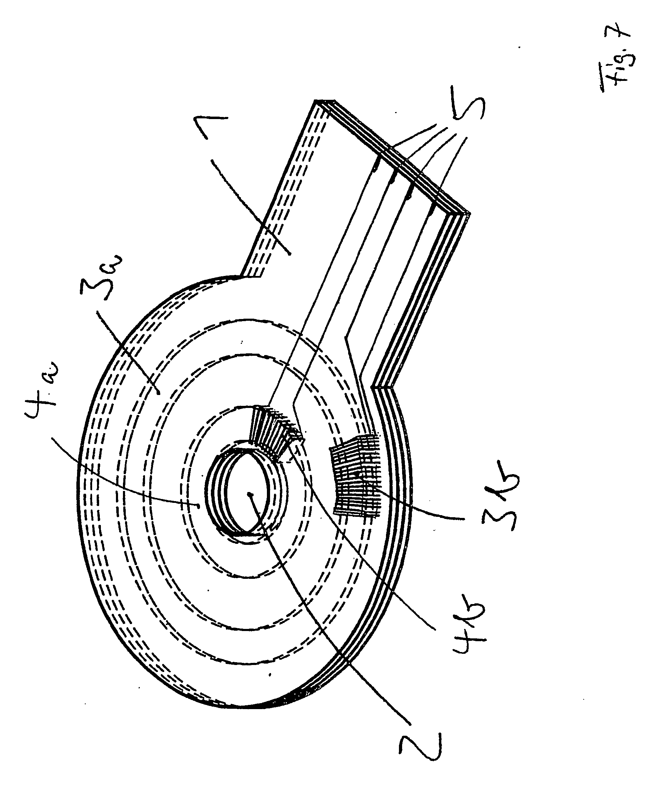

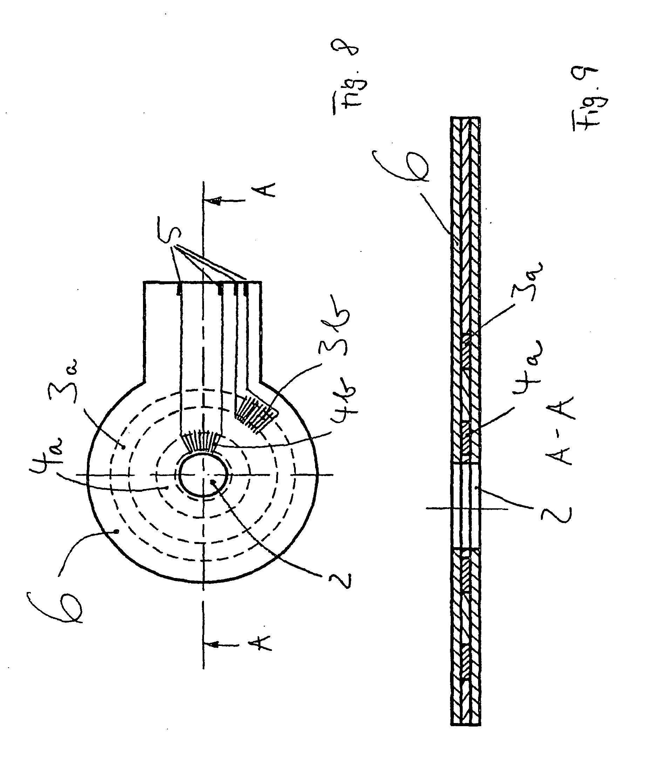

Figuren 7, 8, 9 die Ansicht, die Draufsicht und einen Schnitt der Draufsicht eines erfindungsgemäßen Sensors aus organischem Substratmaterial, bei dem die zwei magnetisierbaren kreisförmigen Kerne übereinander angeordnet sind.

### Bezugszeichenliste

- 1: keramischer Multilayer-Schichtaufbau
- 2: Öffnung
- 3a: ferromagnetischer Kern
- 3b: metallische Wicklungen um Kern 3a
- 4a: ferromagnetischer Kern
- 4b: metallische Wicklungen um Kern 4a
- 5: elektrische Anschlüsse
- 6: organischer Multilayer-Schichtaufbau

### Beispiel 1

Für die Anwendung in Leitfähigkeitssensoren sind Ringspulen (3b, 4b) vorteilhaft, welche mittels keramischer Multilayertechnik aufgebaut werden. Die in Spulen (3b, 4b) nach dem Stand der Technik gewickelten Leiter werden in keramischer Multilayertechnologie als Kombination aus Durchkontaktierungen und gedruckten Leiterzügen geformt. Dazu werden zunächst die Öffnungen für die Durchkontaktierungen in die entsprechenden Ferrit-Tapes gestanzt (gemeinsam mit der Mittenöffnung (2) zur Durchführung der zu detektierenden Flüssigkeit) und anschließend mittels Schablonendruck metallisiert. Danach werden auf die Ober- und Unterseite die zum Schließen des Spulenkreises notwendigen Leiterzüge gedruckt. Das beschriebene Vorgehen wird gleichzeitig für Primär- und Sekundärspule (3b, 4b) durchgeführt. Auf diese Weise erhalten die beiden Spulen je 60 Windungen. Danach werden auf die Außenseiten der beschichteten Ferritkeme (3a, 4a) LTCC-Folien auflaminiert, die Kontaktierungs- und Packagingfunktionen wahrnehmen.

Der gesamte Multilayer-Schichtaufbau (1) wird in Stickstoffatmosphäre bei 900 °C für 2 h gesintert.

Die beschriebene Anordnung hat nach dem Sintern eine Dicke von 1 mm und laterale Abmessungen von 20 x 30 mm²

Nach dem Sintern wird der Aufbau mit einem PEEK umspritzt. Die elektrischen Anschlüsse (5) bleiben von außen zugänglich, ebenso bleibt die Öffnung für das zu messende Fluid durch die Kerne erhalten. Der Sensor hat danach eine Dicke von 3mm und laterale Abmessungen von 25mm x 35mm.

Der fertige Sensor wird über einen Anschlussstutzen in eine Rohrleitung eingebracht und in der Rohrleitung mit der Öffnung längs zur Strömungsrichtung verankert. Durch die danach geöffnete Rohrleitung fließt eine wässrige Lösung, deren elektrische Leitfähigkeit zu bestimmen ist. Nach Anschluss des Sensors wird die Primärspule mit einer elektrischen Wechselspannung von 1 V und einer Frequenz von 5kHz beaufschlagt. Der in der Sekundärspule induzierte Strom ist ein Maß für die elektrische Leitfähigkeit der wässrigen Lösung. Nach einer Messzeit von 1 s wird ein Strom von 0,3 µA gemäß Verfahren nach dem Stand der Technik gemessen. Aus diesem Messwert ergibt sich eine elektrische Leitfähigkeit der wässrigen Lösung von 1mS/cm.

### Beispiel 2

Für die Anwendung in Leitfähigkeitssensoren sind Ringspulen (3b, 4b) vorteilhaft, welche mittels organischer Mehrlagensubstrattechnik aufgebaut werden. Die in Spulen (3b, 4b) nach dem Stand der Technik gewickelten Leiter werden in Leiterplattentechnologie als Kombination aus Durchkontaktierungen und gedruckten Leiterzügen geformt. Dazu werden in den laminierten Verbund (6) aus Platten eines Epoxidharz-Glasfasergewebe-Gemisches und Ringkernen aus einer weichmagnetischen Nickel-Eisen-Legierung mit 75-80 % Nickel-Anteil (3a, 4a), der auf den Außenseiten mit Kupferfolie kaschiert ist, zunächst die auf der Oberseite und Unterseite zum Schließen des Spulenkreises notwendigen Leiterzüge durch Ätzen hergestellt. Danach werden die Öffnungen für die Durchkontaktierungen durch den Verbund gebohrt (gemeinsam mit der Mittenöffnung (2) zur Durchführung der zu detektierenden Flüssigkeit) und anschließend metallisiert. Das beschriebene Vorgehen wird für Primär- und Sekundärspule (3b, 4b) durchgeführt. Auf diese Weise erhalten die beiden Spulen je 60 Windungen. Danach werden die Primär- und Sekundärspule übereinander angeordnet und durch Laminieren oder Kleben fest verbunden. Auf die Außenseiten des Verbundes werden weitere Lagen organischen Materials auflaminiert oder aufgeklebt, die Packagingfunktionen wahrnehmen. Die elektrischen Anschlüsse der Spulen bleiben von außen elektrisch kontaktierbar.

Die beschriebene Anordnung hat nach dem Sintern eine Dicke von 5 mm und laterale Abmessungen von 30 x 40 mm².

Nach dem Sintern wird der Aufbau mit einem PEEK umspritzt. Die Anschlüsse bleiben von außen zugänglich, ebenso bleibt die Öffnung für das zu messende Fluid durch die Kerne erhalten. Der Sensor hat danach eine Dicke von 5mm und laterale Abmessungen von 35mm x 45mm.

Der fertige Sensor wird wie Beispiel 1 eingesetzt.

## Patentansprüche

1. Sensor zur Ermittlung der elektrischen Leitfähigkeit flüssiger Medien mit elektrisch leitfähigen Zu- und Ableitungen und einer dielektrischen Schicht, **dadurch gekennzeichnet, dass** der Sensor aus einem Multilayer-Schichtaufbau (1) besteht, der mindestens ein Trägersubstrat beinhaltet, auf dem mindestens zwei magnetisierbare Kerne (3a, 4a) mit über die Länge der Kerne (3a, 4a) mindestens teilweise umgebenden metallischen Wicklungen (3b, 4b) angeordnet sind, wobei die elektrisch leitfähige Zu- und Ableitungen (5) zu den Wicklungen (3b, 4b) der mindestens zwei Kerne (3a, 4a) vorhanden sind, und der Multilayer-Schichtaufbau (1) mindestens von einer dielektrischen Schicht umgeben ist, wobei zur Ausnutzung des induktiven Messprinzipes die Anordnung des Sensors ein mindestens teilweises Umschließen der beiden umwickelten und ummantelten Kerne oder Kernteile (3a, 4a) gleichzeitig durch die Flüssigkeit realisiert.

2. Sensor nach Anspruch 1, bei dem das Trägersubstrat eine elektrisch nicht leitende Keramik, eine LTCC-Keramik (Low Temperature Cofired Ceramic) oder eine Al₂O₃-Keramik ist und/oder das Trägersubstrat ein organisches Material ist, wobei vorteilhafterweise das organische Material Phenolharz + Papier (FR1, FR2), Epoxidharz + Papier (FR3), Epoxidharz + Glasfasergewebe (FR4, FR5), Polyimid und/oder Polyester ist.

3. Sensor nach Anspruch 1, bei dem die Multilayer-Schichten (1) aus einer Keramik bestehen, die bei Temperaturen bis maximal 900 °C dicht sintert.

4. Sensor nach Anspruch 1, bei dem die magnetisierbaren Kerne (3a, 4a) aus einem weichmagnetischen Material bestehen und /oder die magnetisierbaren Kerne (3a, 4a) aus einem ferritischen Material bestehen, wobei vorteilhafterweise das ferritische Material als Folie oder Paste eingesetzt ist, und/oder die magnetisierbaren Kerne (3a, 4a) als vorgeformte Festkörper eingesetzt sind.

5. Sensor nach Anspruch 1, bei dem die Wicklungen (3b, 4b) aus Cu, Ag, Pd, Au, Al oder aus Kombinationen dieser Materialien bestehen.

6. Sensor nach Anspruch 1, bei dem die magnetisierbaren Kerne (3a, 4a) ringförmig und/oder ineinander und/oder übereinander und/oder nebeneinander angeordnet sind.

7. Sensor nach Anspruch 1, bei dem die magnetisierbaren Kerne (3a, 4a) jeweils zu 5 bis 100 % von Wicklungen (3b, 4b) umgeben sind, wobei vorteilhafterweise die magnetisierbaren Kerne (3a, 4a) jeweils bis maximal 50 % von Wicklungen (3b, 4b) umgeben sind und die Wicklungen (3b, 4b) gegenüberliegend angeordnet sind.

8. Sensor nach Anspruch 1, bei dem der gesamte Multilayer-Schichtaufbau (1) eine Höhe/Dicke von 0,5 bis 5 mm aufweist.

9. Sensor nach Anspruch 1, bei dem die dielektrische Schicht aus einem Kunststoff oder einem Glas besteht.

10. Sensor nach Anspruch 1, bei dem die Signalübertragung über elektrische Leitungen oder per Funk realisiert ist.

11. Sensor nach Anspruch 1, bei dem weitere Sensoren auf Schichten innerhalb des Multilayer-Schichtaufbaus (1) angeordnet sind, wobei vorteilhafterweise Temperatur- und/oder pH-Sensoren innerhalb des Multilayer-Schichtaufbaus (1) angeordnet sind.

12. Sensor nach Anspruch 1, bei dem mehrere magnetisierbare Kernpaare (3a, 4a) mit Wicklungen (3b, 4b) auf einem Trägersubstrat vorhanden sind, wobei auch hier zur Ausnutzung des induktiven Messprinzipes die Flüssigkeit mindestens teilweise alle umwickelten und ummantelten Kerne oder Kernteile gleichzeitig umschließt.

13. Verfahren zur Herstellung eines Sensors zur Ermittlung der elektrischen Leitfähigkeit flüssiger Medien nach mindestens einem der Ansprüche 1 bis 12, bei dem auf eine dielektrische keramische Trägergrünfolie mindestens ein Grünkörper für einen magnetisierbaren Kern (3a, 4a) aus einem ferritischen keramischen Material aufgebracht, der von einem metallischen Draht (3b, 4b) umwickelt ist, wobei zur Realisierung des induktiven Messprinzipes mindestens ein zweiter magnetisierbarer Kern (3a, 4a) mit Wicklungen (3b, 4b) aus einem metallischen Draht auf der gleichen oder einer anderen dielektrischen keramischen Folie aufgebracht wird, und die Wicklungen (3b, 4b) durch die keramische Folie/Folien durchkontaktiert worden sind, danach die metallischen Wicklungen (3b, 4b) mit einer elektrisch leitfähigen Verbindung kontaktiert (5) werden und nachfolgend die Sinterung des keramischen Multilayer-Schichtaufbaus (1) durchgeführt wird, wobei eine dielektrischen Ummantelung des gesamten Multilayer-Schichtaufbaus (1) vor oder nach der Sinterung aufgebracht wird.

14. Verfahren nach Anspruch 13, bei dem dielektrische keramische Grünfolien mit einer Dicke von 50 bis 250 µm eingesetzt werden.

15. Verfahren nach Anspruch 13, bei dem die Sinterung des Multilayer-Schichtaufbaus (1) bei Temperaturen von maximal 900°C durchgeführt wird.

16. Verfahren nach Anspruch 13, bei dem eine Ummantelung aus Kunststoff oder Glas bei Temperaturen von maximal 900°C aufgebracht wird, wobei vorteilhafterweise die Ummantelung durch Tauchen oder Aufspritzen aufgebracht wird.

17. Verfahren zur Herstellung eines Sensors zur Ermittlung der elektrischen Leitfähigkeit flüssiger Medien nach mindestens einem der Ansprüche 1 bis 12, bei dem mindestens ein magnetisierbarer Kern (3a, 4a) auf eine organische Trägerfolie oder Trägerplatte aufgelegt und mit wenigstens einer weiteren Lage organischen Trägermaterials belegt und gemeinsam zu einem starren oder nahezu starren Verbund verpresst oder verklebt wird, danach die Wicklungen (3b, 4b) aus metallischem Draht um den mindestens einen magnetisierbaren Kern (3a, 4a) entsprechend elektrischen Durchkontaktierungen in Leiterplatten hergestellt werden, und mindestens ein Durchbruch durch den Multilayer-Schichtaufbau (1) an der Stelle der inneren Öffnung (2) eines jeden der magnetisierbaren Kerne (3a, 4a) hergestellt wird und gleichzeitig oder nachfolgend die Trägerfolien oder Trägerplatten zum Multilayer-Schichtverbund (1) verpresst werden, danach die metallischen Wicklungen (3b, 4b) mit einer elektrisch leitfähigen Verbindung (5) kontaktiert werden und nachfolgend eine dielektrischen Ummantelung des gesamten Multilayer-Schichtaufbaus (1) aufgebracht wird.

## Claims

1. Sensor for determining the electrical conductivity of liquid media comprising electrically conductive supply leads and terminal leads and a dielectric layer, **characterized in that** the sensor consists of a multilayered structure (1), which comprises at least one carrier substrate on which there are arranged at least two magnetizable cores (3a, 4a) with at least partially surrounding metallic windings (3b, 4b) over the length of the cores (3a, 4a), wherein the electrically conductive supply leads and terminal leads (5) to the windings (3b, 4b) of the at least two cores (3a, 4a) are present and the multilayered structure (1) is surrounded at least by a dielectric layer, wherein, to make use of the inductive measuring principle, the arrangement of the sensor provides an at least partial enclosure of the two wound and sheathed cores or core parts (3a, 4a) simultaneously by the liquid.

2. Sensor according to Claim 1, in which the carrier substrate is an electrically nonconducting ceramic, an LTCC ceramic (Low Temperature Cofired Ceramic) or an Al₂O₃ ceramic and/or the carrier substrate is an organic material, wherein the organic material is advantageously phenolic resin + paper (FR1, FR2), epoxy resin + paper (FR3), epoxy resin + glass fibre fabric (FR4, FR5), polyimide and/or polyester.

3. Sensor according to Claim 1, in which the layers of the multilayered structure (1) consist of a ceramic which sinters densely at temperatures up to a maximum of 900°C.

4. Sensor according to Claim 1, in which the magnetizable cores (3a, 4a) consist of a magnetically soft material and/or the magnetizable cores (3a, 4a) consist of a ferritic material, wherein the ferritic material is advantageously used as a sheet or paste, and/or the magnetizable cores (3a, 4a) are used as preformed solid bodies.

5. Sensor according to Claim 1, in which the windings (3b, 4b) consist of Cu, Ag, Pd, Au, A1 or a combination of these materials.

6. Sensor according to Claim 1, in which the magnetizable cores (3a, 4a) are arranged in an annular manner and/or one inside the other and/or one over the other and/or one next to the other.

7. Sensor according to Claim 1, in which the magnetizable cores (3a, 4a) are respectively surrounded 5 to 100% by windings (3b, 4b), wherein advantageously the magnetizable cores (3a, 4a) are respectively surrounded up to a maximum of 50% by windings (3b, 4b) and the windings (3b, 4b) are arranged oppositely.

8. Sensor according to Claim 1, in which the overall multilayered structure (1) has a height/thickness of 0.5 to 5 mm.

9. Sensor according to Claim 1, in which the dielectric layer consists of a plastic or a glass.

10. Sensor according to Claim 1, in which the signal transmission is provided by way of electrical lines or by radio.

11. Sensor according to Claim 1, in which further sensors are arranged on layers within the multilayered structure (1), wherein temperature and/or pH sensors are advantageously arranged within the multilayered structure (1).

12. Sensor according to Claim 1, in which a number of magnetizable pairs of cores (3a, 4a) with windings (3b, 4b) are present on a carrier substrate, wherein, here too, to make use of the inductive measuring principle, the liquid at least partially encloses all the wound and sheathed cores or core parts simultaneously.

13. Method for producing a sensor for determining the electrical conductivity of liquid media according to at least one of Claims 1 to 12, in which at least one green body for a magnetizable core (3a, 4a) of a ferritic ceramic material around which a metallic wire is wound is applied to a dielectric green ceramic carrier sheet, wherein, to implement the inductive measuring principle, at least a second magnetizable core (3a, 4a) with windings (3b, 4b) of a metallic wire is applied to the same or a different dielectric ceramic sheet, and the windings (3b, 4b) have been plated-through the ceramic sheet/sheets, after which electrical contact is established for the metallic windings (3b, 4b) by an electrically conductive connection and then the sintering of the ceramic multilayered structure (1) is carried out, wherein a dielectric sheathing of the overall multilayered structure (1) is applied before or after the sintering.

14. Method according to Claim 13, in which dielectric green ceramic sheets with a thickness of 50 to 250 µm are used.

15. Method according to Claim 13, in which the sintering of the multilayered structure (1) is carried out at temperatures of a maximum of 900°C.

16. Method according to Claim 13, in which a sheathing of plastic or glass is applied at temperatures of a maximum of 900°C, wherein the sheathing is preferably applied by immersion or spraying.

17. Method for producing a sensor for determining the electrical conductivity of liquid media according to at least one of Claims 1 to 12, in which at least one magnetizable core (3a, 4a) is placed onto an organic carrier sheet or carrier plate and covered with at least one further layer of organic carrier material and together compressed or adhesively bonded to form a rigid or almost rigid composite, after which the windings (3b, 4b) of metallic wire are produced around the at least one magnetizable core (3a, 4a) in accordance with electrical plated-through holes in printed circuit boards, and at least one hole through the multilayered structure (1) is produced at the point of the inner opening (2) of each of the magnetizable cores (3a, 4a) and at the same time or thereafter the carrier sheets or carrier plates are compressed to form the multilayered structure (1), after which the electrical contact is established for the metallic windings (3b, 4b) by an electrically conductive connection (5) and then a dielectric sheathing of the overall multilayered structure (1) is applied.

## Revendications

1. Capteur destiné à la détermination de la conductivité électrique de milieux liquides, pourvu de lignes d'alimentation et d'évacuation conductrices d'électricité et d'une couche diélectrique, **caractérisé en ce que** ledit capteur est constitué d'une structure multicouche (1) incluant au moins un substrat de support sur lequel sont disposés au moins deux noyaux susceptibles d'être aimantés (3a, 4a), les noyaux (3a, 4a) étant, au moins sur une partie de leur longueur, entourés d'enroulements métalliques (3b, 4b), lesdites lignes d'alimentation et d'évacuation conductrices d'électricité (5) étant disposées de telle façon qu'elles mènent aux enroulements (3b, 4b) des au moins deux noyaux (3a, 4a), et la structure multicouche (1) étant entourée d'au moins une couche diélectrique, ledit capteur étant disposé de façon à ce que le liquide entoure simultanément au moins une partie de chacun des noyaux ou morceaux de noyaux (3a, 4a) enroulés et enveloppés, pour ainsi mettre en oeuvre le principe de la mesure par induction.

2. Capteur selon la revendication 1 dont le substrat de support est une céramique non-conductrice d'électricité, une céramique LTCC (Low Temperature Cofired Ceramic) ou une céramique Al₂O₃ et/ou dont le substrat de support est un matériau organique, ledit matériau organique étant avantageusement de la résine phénolique + papier (FR1, FR2), de la résine époxy + papier (FR3), de la résine époxy + tissu en fibres de verre (FR4, FR5), du polyimide et/ou du polyester.

3. Capteur selon la revendication 1 dont les couches multiples (1) sont constituées d'une céramique qui est rendue étanche par un frittage réalisé à des températures inférieures ou égales à 900°C.

4. Capteur selon la revendication 1 dont les noyaux susceptibles d'être aimantés (3a, 4a) sont constitués d'un matériau magnétique doux et/ou dont les noyaux susceptibles d'être aimantés (3a, 4a) sont constitués d'un matériau de type ferrite, ledit matériau de type ferrite étant avantageusement mis en oeuvre sous forme de feuille ou de pâte, et/ou les noyaux susceptibles d'être aimantés (3a, 4a) étant mis en oeuvre sous forme de corps solides préformés.

5. Capteur selon la revendication 1 dont les enroulements (3b, 4b) sont constitués de Cu, Ag, Pd, Au, A1 ou de combinaisons de ces matériaux.

6. Capteur selon la revendication 1 dont les noyaux susceptibles d'être aimantés (3a, 4a) sont disposés sous forme d'anneaux et/ou l'un dans l'autre et/ou l'un au-dessus de l'autre et/ou l'un à côté de l'autre.

7. Capteur selon la revendication 1 dont les noyaux susceptibles d'être aimantés (3a, 4a) sont entourés d'enroulements (3b, 4b) chacun à un taux compris entre 5 et 100 %, les noyaux susceptibles d'être aimantés (3a, 4a) étant avantageusement entourés d'enroulements (3b, 4b) chacun à 50 % au maximum et les enroulements (3b, 4b) étant disposés de façon à être opposés les uns aux autres.

8. Capteur selon la revendication 1 dont la structure multicouche (1) présente, dans son ensemble, une hauteur/épaisseur comprise entre 0,5 et 5 mm.

9. Capteur selon la revendication 1 dont la couche diélectrique est constituée d'une matière plastique ou d'un verre.

10. Capteur selon la revendication 1, dans lequel la transmission des signaux est réalisée à travers des lignes électriques ou par transmission radioélectrique.

11. Capteur selon la revendication 1, dans lequel d'autres capteurs sont disposés sur des couches au sein de la structure multicouche (1), des capteurs de température et/ou de pH étant avantageusement disposés au sein de la structure multicouche (1).

12. Capteur selon la revendication 1, dans lequel un substrat de support est pourvu de plusieurs paires de noyaux susceptibles d'être aimantés (3a, 4a) avec des enroulements (3b, 4b), le liquide entourant, dans cette disposition aussi, au moins une partie de tous les noyaux ou morceaux de noyaux enroulés et enveloppés, pour ainsi mettre en oeuvre le principe de la mesure par induction.

13. Procédé de fabrication d'un capteur destiné à la détermination de la conductivité électrique de milieux liquides selon au moins une des revendications 1 à 12, consistant à appliquer au moins un corps céramique non-cuit, qui est constitué d'un matériau céramique de type ferrite et entouré d'un fil métallique (3b, 4b), sur une feuille de support en céramique non-cuite aux propriétés diélectriques, en vue d'obtenir un noyau susceptible d'être aimanté (3a, 4a), au moins un deuxième noyau susceptible d'être aimanté (3a, 4a) et pourvu d'enroulements (3b, 4b) réalisés en un fil métallique étant appliqué sur la même ou sur une autre feuille céramique aux propriétés diélectriques afin de mettre en oeuvre le principe de la mesure par induction, et les enroulements (3b, 4b) étant mis en contact continu à travers la/les feuille(s) céramique(s), les enroulements métalliques (3b, 4b) étant ensuite mis en contact avec une connexion conductrice d'électricité (5) pour ensuite réaliser le frittage de la structure multicouche céramique (1), l'intégralité de la structure multicouche (1) étant pourvue d'une enveloppe diélectrique avant ou après le frittage.

14. Procédé selon la revendication 13, dans lequel on met en oeuvre des feuilles en céramique non-cuite aux propriétés diélectriques dont l'épaisseur est comprise entre 50 et 250 µm.

15. Procédé selon la revendication 13, dans lequel le frittage de la structure multicouche (1) est réalisé à des températures inférieures ou égales à 900°C.

16. Procédé selon la revendication 13, dans lequel une enveloppe en matière plastique ou en verre est appliquée à des températures inférieures ou égales à 900°C, l'enveloppe étant avantageusement appliquée par immersion ou par projection.

17. Procédé de fabrication d'un capteur destiné à la détermination de la conductivité électrique de milieux liquides selon au moins une des revendications 1 à 12, dans lequel au moins un noyau susceptible d'être aimanté (3a, 4a) est posé sur une feuille de support ou une plaque de support organique pour être recouvert d'une couche supplémentaire de ce matériau de support organique puis être transformé, par laminage ou collage, en structure composite rigide ou quasiment rigide et ensuite réaliser les enroulements (3b, 4b) en fil métallique autour de l'au moins un noyau susceptible d'être aimanté (3a, 4a) en suivant les voies de contact dans des circuits électriques imprimés, la structure multicouche (1) étant percée au moins une fois à l'endroit de l'ouverture interne (2) de chacun des noyaux susceptibles d'être aimantés (3a, 4a), et soumettre, en même temps ou ultérieurement, les feuilles de support ou plaques de support à un laminage afin d'obtenir la structure multicouche (1), puis mettre en contact les enroulements métalliques (3b, 4b) avec une connexion conductrice d'électricité (5) et, enfin, pourvoir l'intégralité de la structure multicouche (1) d'une enveloppe diélectrique.
